# EUROPEAN PATENT APPLICATION

(11) **EP 4 492 404 A1**
(43) Date of publication of application: **15.01.2025**
(21) Application number: 22931016.4
(22) Date of filing: 14.11.2022
(51) Int. Cl.: H01B 1/06, H01B 1/08, H01B 1/10, H01M 4/13, H01M 4/62, H01M 10/052, H01M 10/0562

(54) **SOLID ELECTROLYTE MATERIAL AND BATTERY USING SAME**

(30) Priority: 11.03.2022 JP 2022038570
(71) Applicant: Panasonic Intellectual Property Management Co., Ltd., Kadoma-shi, Osaka 571-0057 (JP)
(72) Inventor: TANAKA, Yoshiaki, Kadoma-shi, Osaka 571-0057 (JP); HAYASHI, Yohei, Kadoma-shi, Osaka 571-0057 (JP); MIZUNO, Keita, Kadoma-shi, Osaka 571-0057 (JP)
(74) Representative: Grünecker Patent- und Rechtsanwälte PartG mbB
(86) International application number: PCT/JP2022/042240
(87) International publication number: WO 2023/171044

(57) **Abstract**

A solid electrolyte material of the present disclosure includes Li, M, A, and X. M is at least one selected from the group consisting of Nb, Ta, and Zr. A is at least one selected from the group consisting of O and S. X is at least one selected from the group consisting of F, Cl, Br, and I. The solid electrolyte material of the present disclosure has a Young's modulus of less than 23 GPa. A battery 1000 of the present disclosure includes a positive electrode 201, a negative electrode 203, and a solid electrolyte layer 202 disposed between the positive electrode 201 and the negative electrode 203, and at least one selected from the group consisting of the positive electrode 201, the negative electrode 203, and the electrolyte layer 202 contains the solid electrolyte material of the present disclosure.

## Description

### Technical Field

The present disclosure relates to a solid electrolyte material and a battery using it.

### Background Art

PTL 1 discloses a solid electrolyte material including Li, M, O, and X. M is at least one element selected from the group consisting of Nb and Ta, and X is at least one element selected from the group consisting of Cl, Br, and I.

### Citation List

### Patent Literature

PTL 1: International Publication No. WO 2020/137153

### Summary of Invention

### Technical Problem

It is an object of the present disclosure to provide a solid electrolyte material that can efficiently exhibit, when formed into an electrode, the ion conductivity of a material itself as the ion conductivity of the electrode.

### Solution to Problem

The solid electrolyte material of the present disclosure is a solid electrolyte material including Li, M, A, and X, wherein
M is at least one selected from the group consisting of Nb, Ta, and Zr,
A is at least one selected from the group consisting of O and S,
X is at least one selected from the group consisting of F, Cl, Br, and I, and
the solid electrolyte material has a Young's modulus of less than 23 GPa. Advantageous Effects of Invention

The present disclosure provides a solid electrolyte material that can efficiently exhibit, when formed into an electrode, the ion conductivity of a material itself as the ion conductivity of the electrode.

### Brief Description of Drawings

[Fig. 1] Fig. 1 shows a cross-sectional view of a battery 1000 according to a second embodiment.
[Fig. 2] Fig. 2 shows a cross-sectional view of an electrode material 1100 according to the second embodiment.
[Fig. 3] Fig. 3 shows a schematic diagram of a compression molding dies 300 that is used for evaluating the ion conductivity of a solid electrolyte material.

### Description of Embodiments

Embodiments of the present disclosure will now be described with reference to drawings.

### (First embodiment)

The solid electrolyte material according to a first embodiment includes Li, M, A, and X. M is at least one selected from the group consisting of Nb, Ta, and Zr. A is at least one selected from the group consisting of O and S. X is at least one selected from the group consisting of F, Cl, Br, and I. The solid electrolyte material according to the first embodiment has a Young's modulus of less than 23 GPa.

The solid electrolyte material according to the first embodiment can efficiently exhibit, when formed into an electrode, the ion conductivity of the material itself as the ion conductivity of the electrode. That is, the solid electrolyte material according to the first embodiment can improve the electrode structure factor.

Here, the electrode structure factor will be described. In order to decrease the resistance of a battery, it is necessary to improve the ion conductivity (i.e., effective ion conductivity) of a positive electrode or a negative electrode. The effective ion conductivity depends on not only the ion conductivity of the solid electrolyte material that is used in the electrode, but also, for example, (1) the tortuosity ratio of the solid electrolyte material in the electrode, the porosity of the solid electrolyte material in the electrode (i.e., the denseness of the solid electrolyte material), and the grain boundary of the solid electrolyte material in the electrode. The tortuosity ratio is the ratio of the ion conductive path length of the solid electrolyte material in the electrode to the thickness of the electrode. The factor involved in the structure of the solid electrolyte material in an electrode as described above is the electrode structure factor. That is, the effective ion conductivity also depends on the electrode structure factor in addition to the ion conductivity of the solid electrolyte material to be used. The electrode structure factor is evaluated by the ratio of the effective ion conductivity to the ion conductivity of the solid electrolyte material. That is, the larger the electrode structure factor, the higher the effective ion conductivity.

The solid electrolyte material according to the first embodiment has a low Young's modulus of less than 23 GPa. Consequently, the solid electrolyte material according to the first embodiment improves the tortuosity ratio as the porosity of the solid electrolyte material in the electrode decreases. As a result, the electrode structure factor of a battery using the solid electrolyte material according to the first embodiment increases, and the effective ion conductivity is improved. Accordingly, the battery using the solid electrolyte material according to the first embodiment has a low battery resistance.

The Young's modulus of the solid electrolyte material according to the first embodiment can be measured using, for example, a nanoindentation method. Specifically, the Young's moduli of three particles arbitrarily selected from a particulate solid electrolyte material are measured using a nanoindentation apparatus. The particle diameters of the selected particles are set to, for example, a range of from 1 µm to 100 µm. The Young's modulus is determined by calculating the average of the obtained measured values. When the Young's modulus of the solid electrolyte material is difficult to be measured by the nanoindentation method (for example, particles having particle diameters suitable for the measurement cannot be selected), as an alternative method, for example, the Young's modulus can be also measured by molding the solid electrolyte material into a pellet shape and using the pellet as a measurement sample.

The solid electrolyte material according to the first embodiment can maintain a high lithium ion conductivity in an expected operating temperature range (for example, a range of from -30°C to 80°C) of a battery. Accordingly, the battery using the solid electrolyte material according to the first embodiment can stably operate also in an environment with temperature changes. The high lithium ion conductivity in an expected operating temperature range of a battery is, for example, 1 mS/cm or more.

In order to enhance the ion conductivity of the solid electrolyte material, the solid electrolyte material according to the first embodiment may consist essentially of Li, M, A, and X. Here, the phrase "the solid electrolyte material according to the first embodiment consists essentially of Li, M, A, and X " means that the molar proportion of the sum of the amounts of Li, M, A, and X to the sum of the amounts of all elements constituting the solid electrolyte material according to the first embodiment is 90% or more. As an example, the molar proportion may be 95% or more.

In order to enhance the ion conductivity of the solid electrolyte material, the solid electrolyte material according to the first embodiment may consist of Li, M, A, and X only.

In order to improve the electrode structure factor, the solid electrolyte material according to the first embodiment may have a Young's modulus of 20 GPa or less. In further improve the electrode structure factor, the solid electrolyte material according to the first embodiment may have a Young's modulus of 19.6 GPa or less.

The lower limit of the Young's modulus of the solid electrolyte material according to the first embodiment is not particularly limited, but the Young's modulus of the solid electrolyte material according to the first embodiment may be, for example, 5 GPa or more.

In order to improve the electrode structure factor, the solid electrolyte material according to the first embodiment may have a Young's modulus of 10.8 GPa or more and 19.6 GPa or less.

In order to enhance the ion conductivity of the solid electrolyte material, in the solid electrolyte material according to the first embodiment, X may include Cl, or X may be Cl.

In order to enhance the ion conductivity of the solid electrolyte material, in the solid electrolyte material according to the first embodiment, A may include O, or A may be O.

In order to further enhance the ion conductivity of the solid electrolyte material, in the solid electrolyte material according to the first embodiment, A may include both O and S. That is, A may be O and S.

In order to enhance the ion conductivity of the solid electrolyte material, the molar ratio of Li to M may be 0.60 or more and 3.0 or less or 0.90 or more and 2.0 or less.

In order to enhance the ion conductivity of the solid electrolyte material, the molar ratio of O to X may be 0.05 or more and 0.35 or less.

In order to enhance the ion conductivity of the solid electrolyte material, A may include S, and the molar ratio of S to M may be 0.1 or more and 0.7 or less.

The shape of the solid electrolyte material according to the first embodiment is not restricted. Examples of the shape are needle, spherical, and oval spherical shapes. The solid electrolyte material according to the first embodiment may be a particle. The solid electrolyte material according to the first embodiment may be formed so as to have a pellet or planar shape.

When the solid electrolyte material according to the first embodiment has a particulate shape (e.g., spherical shape), the solid electrolyte material may have a median diameter of 0.1 µm or more and 100 µm or less or a median diameter of 0.5 µm or more and 10 µm or less. Consequently, the solid electrolyte material according to the first embodiment and other materials can be well dispersed. The median diameter of particles means the particle diameter (d50) corresponding to the 50% accumulated volume in a volume-based particle size distribution. The volume-based particle size distribution can be measured with a laser diffraction measurement apparatus or an image analyzer.

When the solid electrolyte material according to the first embodiment has a particulate shape (e.g., spherical shape), the solid electrolyte material may have a median diameter smaller than that of an active material. Consequently, the solid electrolyte material according to the first embodiment and the active material can form a good dispersion state.

### <Manufacturing method of solid electrolyte material>

The solid electrolyte material according to the first embodiment can be manufactured by the following method.

Raw material powders are provided so as to give a desired composition. Examples of the raw material powder include an oxide, a hydroxide, a halide, and an acid halide.

As one example, in a solid electrolyte material constituted of Li, M, A, and X, when M is Ta, A is O, X is Cl, and the molar ratios, Li/M and A/X, are 1.0 and 0.2, respectively, at the time of mixing the raw materials, LiOH and TaCl₅ are mixed at a molar ratio of LiOH : TaCl₅ = 1 : 1. M and X are determined by selecting the raw material powders. The molar ratios of Li/M and A/X can be adjusted by appropriately selecting the mixing ratios of the raw material powders.

A reaction product can be obtained by mechanochemically reacting a mixture of raw material powders with each other (by a mechanochemical milling method) in a mixing apparatus such as a planetary ball mill.

The Young's modulus of the solid electrolyte material to be obtained can be reduced by decreasing the energy to be applied to the raw material powders in mechanochemical milling. That is, the Young's modulus of the solid electrolyte material to be obtained can be controlled in a desired range by adjusting the energy to be applied to the raw material powders at the time of synthesis. The magnitude of the energy to be applied to the raw material powders can be adjusted by the rotational speed in milling treatment or the material or size of the grinding media to be used.

The composition of a solid electrolyte material is determined by, for example, ICP emission spectrometry, ion chromatography, an inert gas melting-infrared absorption method, or an EPMA (electron probe micro analyzer) method.

### (Second embodiment)

A second embodiment will now be described. Matters described in the first embodiment will be omitted as appropriate.

The battery according to the second embodiment includes a positive electrode, an electrolyte layer, and a negative electrode. The electrolyte layer is disposed between the positive electrode and the negative electrode. At least one selected from the group consisting of the positive electrode, the electrolyte layer, and the negative electrode contains the solid electrolyte material according to the first embodiment.

The battery according to the second embodiment has excellent charge and discharge characteristics.

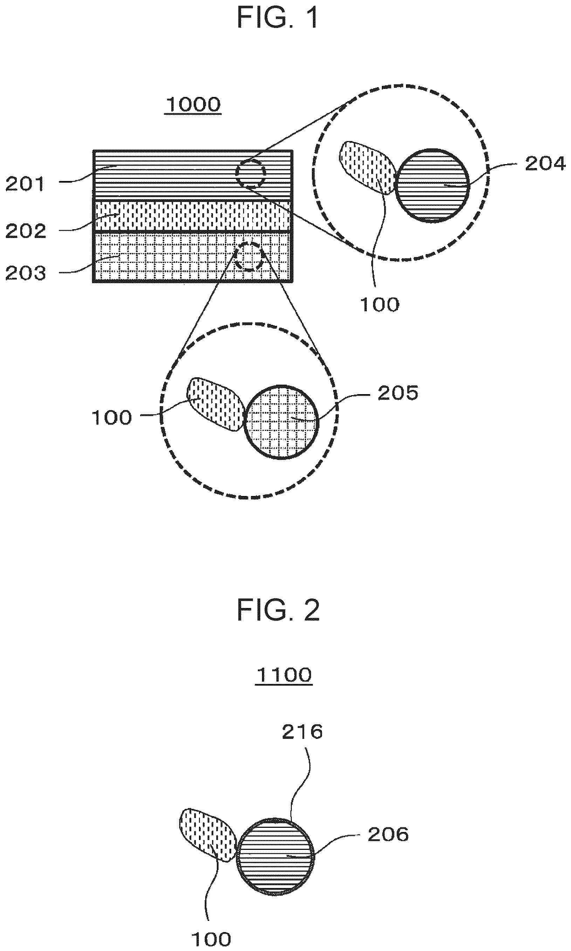

Fig. 1 shows a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 contains a positive electrode active material particle 204 and a solid electrolyte particle 100.

The electrolyte layer 202 contains an electrolyte material. The electrolyte material is, for example, a solid electrolyte material.

The negative electrode 203 contains a negative electrode active material particle 205 and a solid electrolyte particle 100.

The solid electrolyte particle 100 is a particle containing the solid electrolyte material according to the first embodiment. The solid electrolyte particle 100 may be a particle of which the main component is the solid electrolyte material according to the first embodiment. The particle of which the main component is the solid electrolyte material according to the first embodiment means a particle in which the component with the highest molar ratio is the solid electrolyte material according to the first embodiment. The solid electrolyte particle 100 may be a particle consisting of the solid electrolyte material according to the first embodiment.

The positive electrode 201 contains a material that can occlude and release metal ions such as lithium ions. The positive electrode 201 contains, for example, a positive electrode active material (e.g., the positive electrode active material particle 204).

Examples of the positive electrode active material are a lithium-containing transition metal oxide, a transition metal fluoride, a polyanionic material, a fluorinated polyanionic material, a transition metal sulfide, a transition metal oxysulfide, and a transition metal oxynitride. Examples of the lithium-containing transition metal oxide are Li(Ni,Co,Al)O₂, LiCoO₂, and Li(Ni,Co,Mn)O₂.

In the present disclosure, "(A,B,C)" means "at least one selected from the group consisting of A, B, and C". Here, A, B, and C all represent elements.

From the viewpoint of the cost and safety of a battery, lithium phosphate may be used as the positive electrode active material.

When the positive electrode 201 contains the solid electrolyte material according to the first embodiment and X is I (i.e., iodine), iron lithium phosphate may be used as the positive electrode active material. The solid electrolyte material according to the first embodiment containing I is easily oxidized. The oxidation reaction of the solid electrolyte material is suppressed by using iron lithium phosphate as the positive electrode active material. That is, formation of an oxide layer having a low lithium ion conductivity is suppressed. As a result, the battery has a high charge and discharge efficiency.

The positive electrode 201 may also contain a transition metal oxyfluoride as the positive electrode active material in addition to the solid electrolyte material according to the first embodiment. Even if the solid electrolyte material according to the first embodiment is fluorinated by a transition metal fluoride, a resistive layer is unlikely to be formed. As a result, the battery has a high charge and discharge efficiency.

The transition metal oxyfluoride contains oxygen and fluorine. As an example, the transition metal oxyfluoride may be a compound represented by a composition formula: LiₚMe_{q}OₘFₙ. Here, Me is at least one element selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and the following mathematical expressions: 0.5 ≤ p ≤ 1.5, 0.5 ≤ q ≤ 1.0, 1 ≤ m < 2, and 0 < n ≤ 1 are satisfied. An example of such transition metal oxyfluoride is Li_{1.05}(Ni_{0.35}CO_{0.35}Mn_{0.3})_{0.95}O_{1.9}F_{0.1}.

The positive electrode active material particle 204 may have a median diameter of 0.1 µm or more and 100 µm or less. When the positive electrode active material particle 204 has a median diameter of 0.1 µm or more, the positive electrode active material particle 204 and the solid electrolyte particle 100 can form a good dispersion state in the positive electrode 201. Consequently, the charge and discharge characteristics of the battery are improved. When the positive electrode active material particle 204 has a median diameter of 100 µm or less, the lithium diffusion speed in the positive electrode active material particle 204 is improved. Consequently, the battery can operate at a high output.

The positive electrode active material particle 204 may have a median diameter larger than that of the solid electrolyte particle 100. Consequently, the positive electrode active material particle 204 and the solid electrolyte particle 100 can form a good dispersion state.

In order to improve the energy density and output of the battery, the ratio of the volume of the positive electrode active material particle 204 to the sum of the volume of the positive electrode active material particle 204 and the volume of the solid electrolyte particle 100 in the positive electrode 201 may be 0.30 or more and 0.95 or less.

Fig. 2 shows a cross-sectional view of an electrode material 1100 according to the second embodiment. The electrode material 1100 is included in, for example, the positive electrode 201. In order to prevent the electrode active material particle 206 from reacting with the solid electrolyte particle 100, a covering layer 216 may be formed on the surface of the electrode active material particle 206. Consequently, an increase in the reaction overvoltage of the battery can be suppressed. Examples of the covering material contained in the covering layer 216 are a sulfide solid electrolyte, an oxide solid electrolyte, and a halide solid electrolyte.

When the solid electrolyte particle 100 is a sulfide solid electrolyte, the covering material may be the solid electrolyte material according to the first embodiment, and X may be at least one element selected from the group consisting of Cl and Br. Such solid electrolyte material according to the first embodiment is hardly oxidized compared to the sulfide solid electrolyte. As a result, an increase in the reaction overvoltage of the battery can be suppressed.

When the solid electrolyte particle 100 is the solid electrolyte material according to the first embodiment and X includes I, the covering material may be the solid electrolyte material according to the first embodiment, and X may be at least one element selected from the group consisting of Cl and Br. The solid electrolyte material according to the first embodiment not containing I is hardly oxidized compared to the solid electrolyte material according to the first embodiment containing I. As a result, the battery has a high charge and discharge efficiency.

When the solid electrolyte particle 100 is the solid electrolyte material according to the first embodiment and X includes I, the covering material may include an oxide solid electrolyte. The oxide solid electrolyte may be lithium niobate, which has excellent stability even at a high potential. Consequently, the battery has a high charge and discharge efficiency.

The positive electrode 201 may be composed of a first positive electrode layer containing a first positive electrode active material and a second positive electrode layer containing a second positive electrode active material. Here, the second positive electrode layer is disposed between the first positive electrode layer and an electrolyte layer 202, the first positive electrode layer and the second positive electrode layer contain the solid electrolyte material according to the first embodiment containing I, and a covering layer 216 is formed on the surface of the second positive electrode active material. According to the above configuration, the solid electrolyte material according to the first embodiment contained in the electrolyte layer 202 can be suppressed from being oxidized by the second positive electrode active material. As a result, the battery has a high charging capacity. Examples of the covering material contained in the covering layer 206 are a sulfide solid electrolyte, an oxide solid electrolyte, a polymeric solid electrolyte, and a halide solid electrolyte. However, when the covering material is a halide solid electrolyte, I is not included as the halogen element. The first positive electrode active material may be a material that is the same as the second positive electrode active material or a material that is different from the second positive electrode active material.

In order to improve the energy density and output of the battery, the positive electrode 201 may have a thickness of 10 µm or more and 500 µm or less.

The electrolyte layer 202 contains an electrolyte material. The electrolyte material is, for example, a solid electrolyte material. The electrolyte layer 202 may be a solid electrolyte layer. The solid electrolyte material contained in the electrolyte layer 202 may contain the solid electrolyte material according to the first embodiment. The solid electrolyte material contained in the electrolyte layer 202 may consist of the solid electrolyte material according to the first embodiment only.

The solid electrolyte material contained in the electrolyte layer 202 may be constituted of only a solid electrolyte material that is different from the solid electrolyte material according to the first embodiment. Examples of the solid electrolyte material that is different from the solid electrolyte material according to the first embodiment are Li₂MgX'₄, Li₂FeX'₄, Li(Al,Ga,In)X'₄, Li₃(Al,Ga,In)X'₆, and LiI. Here, X' is at least one element selected from the group consisting of F, Cl, Br, and I.

Hereinafter, the solid electrolyte material according to the first embodiment is referred to as first solid electrolyte material; and the solid electrolyte material that is different from the solid electrolyte material according to the first embodiment is referred to as second solid electrolyte material.

The electrolyte layer 202 may contain a second solid electrolyte material, in addition to a first solid electrolyte material. The first solid electrolyte material and the second solid electrolyte material may be uniformly dispersed.

The electrolyte layer 202 may have a thickness of 1 µm or more and 100 µm or less. When the electrolyte layer 202 has a thickness of 1 µm or more, the positive electrode 201 and the negative electrode 203 are less likely to short circuit. When the electrolyte layer 202 has a thickness of 100 µm or less, the battery can operate at a high output.

Another electrolyte layer may be further provided between the electrolyte layer 202 and the negative electrode 203. For example, when the electrolyte layer 202 contains the first solid electrolyte material, in order to more stably maintain the high ion conductivity of the solid electrolyte material, an electrolyte layer constituted of another solid electrolyte material that is electrochemically stable than the solid electrolyte material may be further provided.

The negative electrode 203 contains a material that can occlude and release metal ions (e.g., lithium ions). The negative electrode 203 contains, for example, a negative electrode active material (e.g., the negative electrode active material particle 205).

Examples of the negative electrode active material are a metal material, a carbon material, an oxide, a nitride, a tin compound, and a silicon compound. The metal material may be a single metal or may be an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of capacity density, suitable examples of the negative electrode active material are silicon (i.e., Si), tin (i.e., Sn), a silicon compound, and a tin compound.

The negative electrode active material may be selected based on the reduction resistance of the solid electrolyte material included in the negative electrode 203. When the negative electrode 203 contains the first solid electrolyte material, a material that can occlude and release lithium ions at 0.27 V or more with respect to lithium may be used as the negative electrode active material. When the negative electrode active material is such a material, it is possible to suppress the first solid electrolyte material included in the negative electrode 203 from being reduced. As a result, the battery has a high charge and discharge efficiency. Examples of the material are titanium oxide, indium metal, and a lithium alloy. Examples of the titanium oxide are Li₄Ti₅O₁₂, LiTi₂O₄, and TiO₂.

The negative electrode active material particle 205 may have a median diameter of 0.1 µm or more and 100 µm or less. When the negative electrode active material particle 205 has a median diameter of 0.1 µm or more, the negative electrode active material particle 205 and the solid electrolyte particle 100 can form a good dispersion state in the negative electrode 203. Consequently, the charge and discharge characteristics of the battery are improved. When the negative electrode active material particle 205 has a median diameter of 100 µm or less, the lithium diffusion speed in the negative electrode active material particle 205 is improved. Consequently, the battery can operate at a high output.

The negative electrode active material particle 205 may have a median diameter larger than that of the solid electrolyte particle 100. Consequently, the negative electrode active material particle 205 and the solid electrolyte particle 100 can form a good dispersion state.

In order to improve the energy density and output of the battery, the ratio of the volume of the negative electrode active material particle 205 to the sum of the volume of the negative electrode active material particle 205 and the volume of the solid electrolyte particle 100 in negative electrode 203 may be 0.30 or more and 0.95 or less.

The electrode material 1100 shown in Fig. 2 may be contained in the negative electrode 203. In order to prevent the solid electrolyte particle 100 from reacting with the negative electrode active material (i.e., the electrode active material particle 206), a covering layer 216 may be formed on the surface of the electrode active material particle 206. Consequently, the battery has a high charge and discharge efficiency. Examples of the covering material contained in the covering layer 216 are a sulfide solid electrolyte, an oxide solid electrolyte, a polymeric solid electrolyte, and a halide solid electrolyte.

When the solid electrolyte particle 100 is a first solid electrolyte material, the covering material may be a sulfide solid electrolyte, an oxide solid electrolyte, or a polymeric solid electrolyte. An example of the sulfide solid electrolyte is Li₂S-P₂S₅. An example of the oxide solid electrolyte is trilithium phosphate. Examples of the polymeric solid electrolyte are polyethylene oxide and a conjugated compound of a lithium salt. An example of such polymeric solid electrolyte is lithium bis(trifluoromethanesulfonyl)imide.

In order to improve the energy density and output of the battery, the negative electrode 203 may have a thickness of 10 µm or more and 500 µm or less.

At least one selected from the group consisting of the positive electrode 201, the electrolyte layer 202, and the negative electrode 203 may contain a second solid electrolyte material for the purpose of enhancing the ion conductivity. Examples of the second solid electrolyte material are a sulfide solid electrolyte, an oxide solid electrolyte, a halide solid electrolyte, and an organic polymeric solid electrolyte.

In the present disclosure, the term "sulfide solid electrolyte" means a solid electrolyte containing sulfur. The term "oxide solid electrolyte" means a solid electrolyte containing oxygen. The oxide solid electrolyte may contain an anion (excluding a sulfur anion and a halogen anion) in addition to oxygen. The term "halide solid electrolyte" means a solid electrolyte containing a halogen element and not containing sulfur. The halide solid electrolyte may contain oxygen in addition to a halogen element.

Examples of the sulfide solid electrolyte are Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the oxide solid electrolyte are:
(i) an NASICON-type solid electrolyte, such as LiTi₂(PO₄)₃ or an element substitute thereof;
(ii) a perovskite-type solid electrolyte, such as (LaLi)TiO₃;
(iii) an LISICON-type solid electrolyte, such as Li₁₄ZnGe₄O₁₆, Li₄SiO₄, LiGeO₄, or an element substitute thereof;
(iv) a garnet-type solid electrolyte, such as Li₇La₃Zr₂O₁₂ or an element substitute thereof; and
(v) Li₃PO₄ or an N-substitute thereof.

Examples of the halide solid electrolyte are compounds represented by LiₐMe'_{b}Y_{c}Z₆. Here, mathematical expressions: a + mb + 3c = 6 and c > 0 are satisfied. Me' is at least one selected from the group consisting of metal elements other than Li and Y and metalloid elements. Z is at least element selected from the group consisting of F, Cl, Br, and I. The value of m represents the valence of Me'.

The "metalloid elements" are B, Si, Ge, As, Sb, and Te. The "metal elements" are all elements included in Groups 1 to 12 of the periodic table (however, hydrogen is excluded) and all elements included in Groups 13 to 16 in the periodic table (however, B, Si, Ge, As, Sb, Te, C, N, P, O, S, and Se are excluded). Me' may be at least one element selected from the group consisting of Mg, Ca, Sr, Ba, Zn, Sc, Al, Ga, Bi, Zr, Hf, Ti, Sn, Ta, and Nb.

Examples of the halide solid electrolyte are Li₃YCl₆ and Li₃YBr₆.

When the electrolyte layer 202 contains a first solid electrolyte material, the negative electrode 203 may contain a sulfide solid electrolyte. Consequently, the sulfide solid electrolyte, which is electrochemically stable against the negative electrode active material, suppresses the first solid electrolyte material and the negative electrode active material from becoming in contact with each other. As a result, the battery has low internal resistance.

Examples of the organic polymeric solid electrolyte are a polymeric compound and a compound of a lithium salt. The polymeric compound may have an ethylene oxide structure. A polymeric compound having an ethylene oxide structure can contain a large amount of a lithium salt and can therefore has a higher ion conductivity.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone, or a mixture of two or more lithium salts selected from these salts may be used.

At least one selected from the group consisting of the positive electrode 201, the electrolyte layer 202, and the negative electrode 203 may contain a nonaqueous electrolyte solution, a gel electrolyte, or an ionic liquid for the purpose of facilitating the transfer of lithium ions and improving the output characteristics of the battery.

The nonaqueous electrolyte solution includes a nonaqueous solvent and a lithium salt dissolved in the nonaqueous solvent. Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is γ-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate. One nonaqueous solvent selected from these solvents may be used alone. Alternatively, a mixture of two or more nonaqueous solvents selected from these solvents may be used.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone. Alternatively, a mixture of two or more lithium salts selected from these salts may be used. The concentration of the lithium salt is, for example, in a range of 0.5 mol/L or more and 2 mol/L or less.

As the gel electrolyte, a polymer material impregnated with a nonaqueous electrolyte solution can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:
(i) an aliphatic chain quaternary salt, such as tetraalkylammonium or tetraalkylphosphonium;
(ii) an aliphatic cyclic ammonium, such as a pyrrolidinium, a morpholinium, an imidazolinium, a tetrahydropyrimidinium, a piperazinium, or a piperidinium; and
(iii) a nitrogen-containing heterocyclic aromatic cation, such as a pyridinium or an imidazolium.

Examples of the anion included in the ionic liquid are PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

At least one selected from the group consisting of the positive electrode 201, the electrolyte layer 202, and the negative electrode 203 may contain a binder for the purpose of improving the adhesion between individual particles.

Examples of the binder are polyvinylidene fluoride, polytetrafluoroethylene, polyethylene, polypropylene, an aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of the binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these materials may be used.

At least one selected from the group consisting of the positive electrode 201 and the negative electrode 203 may contain a conductive assistant in order to enhance the electron conductivity.

Examples of the conductive assistant are:
(i) graphite, such as natural graphite or artificial graphite;
(ii) carbon black, such as acetylene black or Ketjen black;
(iii) conductive fibers, such as carbon fibers or metal fibers;
(iv) carbon fluoride;
(v) metal powders, such as aluminum;
(vi) conductive whiskers, such as zinc oxide or potassium titanate;
(vii) a conductive metal oxide, such as titanium oxide; and
(viii) a conductive polymeric compound, such as polyaniline, polypyrrole, or polythiophene.
In order to reduce the cost, the conductive assistant of the above (i) or (ii) may be used.

Examples of the shape of the battery according to the second embodiment are coin type, cylindrical type, square type, sheet type, button type, flat type, and stacked type.

### EXAMPLES

The present disclosure will now be described in more detail with reference to Examples.

### (Example 1)

### [Production of solid electrolyte material]

LiOH, LiCl, and TaCl₅ were provided as raw material powders at a molar ratio of LiOH : LiCl : TaCl₅ = 0.8 : 0.1 : 1.0 in a dry atmosphere having a dew point of less than or equal to -30°C (hereinafter, referred to as "dry atmosphere"). These raw material powders were pulverized and mixed in a mortar to obtain a powder mixture. The obtained powder mixture was subjected to milling treatment with a planetary ball mill at 500 rpm for 24 hours. Thus, a solid electrolyte material of Example 1 was obtained. The molar ratio Li/M was 0.9, and the molar ratio O/X was 0.19. The molar ratios Li/M and O/X were determined by measuring Li and M by ICP emission spectral analysis, X by ion chromatography, and O by an inert gas fusion-infrared absorption method. The apparatuses used for measurement of the composition were an ICP emission spectral analyzer, an ion chromatographic apparatus, and an oxygen analyzer.

### [Evaluation of ion conductivity]

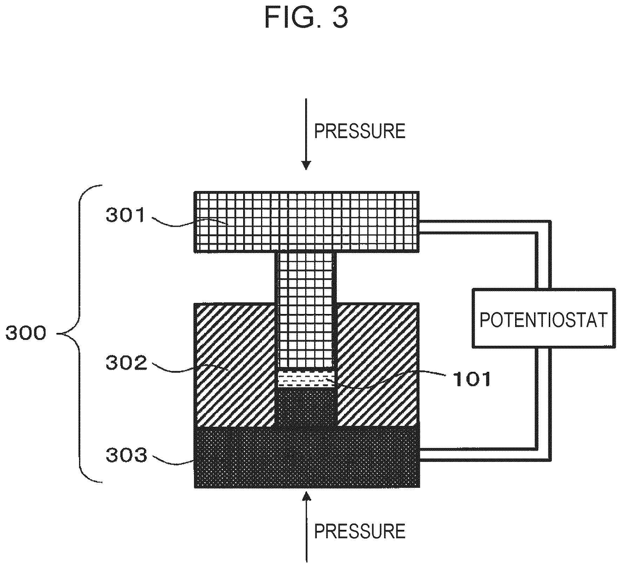

Fig. 3 shows a schematic diagram of a compression molding dies 300 that is used for evaluating the ion conductivity of a solid electrolyte material.

The compression molding dies 300 included a punch upper part 301, a die 302, and a punch lower part 303. The die 302 was formed from insulating polycarbonate. The punch upper part 301 and the punch lower part 303 were both formed from electron-conductive stainless steel.

The ion conductivity of the solid electrolyte material of Example 1 was measured using the compression molding dies 300 shown in Fig. 3 by the following method.

The powder of the solid electrolyte material of Example 1 (i.e., the powder 101 of the solid electrolyte material in Fig. 3) was loaded inside the compression molding dies 300 in the dry atmosphere. A pressure of 300 MPa was applied to the solid electrolyte material of Example 1 inside the compression molding dies 300 using the punch upper part 301.

While applying the pressure, the compression molding dies 300 was connected to a potentiostat (Princeton Applied Research, VersaSTAT4) equipped with a frequency response analyzer through the punch upper part 301 and the punch lower part 303. The punch upper part 301 was connected to the working electrode and the potential measurement terminal. The punch lower part 303 was connected to the counter electrode and the reference electrode. The ion conductivity of the solid electrolyte material of Example 1 was measured by an electrochemical impedance measurement method at room temperature. As a result, the ion conductivity measured at 22°C was 5.6 mS/cm.

### [Evaluation of effective ion conductivity]

The solid electrolyte material of Example 1 and LiCoO₂ as a positive electrode active material were provided at a volume ratio of 75 : 25 in an argon atmosphere having a dew point of less than or equal to -60°C. These materials were mixed in a mortar to obtain a mixture.

A sulfide solid electrolyte of Li₂S-P₂S₅, the above mixture, and a sulfide solid electrolyte of Li₂S-P₂S₅ were stacked in this order in an insulating cylinder having an inner diameter of 9.5 mm. Subsequently, a pressure of 360 MPa was applied to this stack. Thus, an electrode including the solid electrolyte material of Example 1 sandwiched between layers of the sulfide solid electrolyte was produced.

Subsequently, Li metal foil was stacked above and below the electrode. A pressure of 80 MPa was applied to the resulting stack to form a cell for effective ion conductivity measurement.

A voltage was applied to the cell, and the resistance value of the cell was determined from the amount of detected current. Subsequently, the conductivity was calculated from the reciprocal of the resistance value. The effective ion conductivity of the electrode including the solid electrolyte material of Example 1 was measured by subtracting the conductivity of the sulfide solid electrolyte of Li₂S-P₂S₅ from the obtained conductivity. As a result, the effective ion conductivity measured at 22°C was 0.52 mS/cm. The electrode structure factor, which is the ratio of the effective ion conductivity to the ion conductivity, was 0.09.

### [Evaluation of Young's modulus]

The Young's modulus of the solid electrolyte material was calculated from a load-displacement curve using Nanoindenter (manufactured by Bruker, TI980).

As a result, the Young's modulus of the solid electrolyte material of Example 1 was 10.8 GPa.

### (Examples 2 and 3 and Comparative Examples 1 and 2)

### [Production of solid electrolyte material]

In Example 2, Li₂O, LiOH, ZrCl₄, and Li₂S were provided as raw material powders at a molar ratio of Li₂O : LiOH : ZrCl₄ : Li₂S = 0.7 : 0.2 : 1.0 : 0.2. The composition of the obtained solid electrolyte material was analyzed by the same method as in Example 1, and the molar ratios Li/M, O/X, and S/M were determined from the analyzed composition. The molar ratio Li/M was 2.0, O/X was 0.20, and S/M was 0.2.

In Example 3, LiOH and TaCl₅ were provided as raw material powders at a molar ratio of LiOH : TaCl₅ = 0.9 : 1.0. The composition of the obtained solid electrolyte material was analyzed by the same method as in Example 1, and the molar ratios Li/M and O/X were determined from the analyzed composition. The molar ratio Li/M was 0.9, and O/X was 0.23.

Solid electrolyte materials of Examples 2 and 3 were obtained as in Example 1 except for the above matters.

In Comparative Example 1, LiOH and TaCl₅ were provided as raw material powders at a molar ratio of LiOH : TaCl₅ = 0.9 : 1.0. These raw material powders were pulverized and mixed in a mortar to obtain a powder mixture. The obtained powder mixture was heat-treated at 230°C for 3 hours. The resulting heat-treated product was pulverized in an agate mortar. Thus, a solid electrolyte material of Comparative Example 1 was obtained. The composition of the obtained solid electrolyte material was analyzed by the same method as in Example 1, and the molar ratios Li/M and O/X were determined from the analyzed composition. The molar ratio Li/M was 0.9, and O/X was 0.22.

In Comparative Example 2, LiOH and TaCl₅ were provided as raw material powders at a molar ratio of LiOH : TaCl₅ = 0.9 : 1.0. These raw material powders were pulverized and mixed in a mortar to obtain a powder mixture. The obtained powder mixture was subjected to milling treatment with a planetary ball mill at 600 rpm for 24 hours. Thus, a solid electrolyte material of Comparative Example 2 was obtained. The composition of the obtained solid electrolyte material was analyzed by the same method as in Example 1, and the molar ratios Li/M and O/X were determined from the analyzed composition. The molar ratio Li/M was 0.9, and O/X was 0.25.

### [Evaluation of ion conductivity]

The ion conductivity of each of the solid electrolyte materials of Examples 2 and 3 and Comparative Examples 1 and 2 was measured as in Example 1. The measurement results are shown in Table 1.

### [Evaluation of effective ion conductivity]

The effective ion conductivity of each of the solid electrolyte materials of Examples 2 and 3 and Comparative Examples 1 and 2 was calculated as in Example 1. The measurement results are shown in Table 1.

The electrode structure factor, which is the ratio of the effective ion conductivity to the ion conductivity, is also shown in Table 1.

### [Evaluation of Young's modulus]

The Young's modulus of each of the solid electrolyte materials of Examples 2 and 3 and Comparative Examples 1 and 2 was measured as in Example 1. The measurement results are shown in Table 1.

**[Table 1]**

| | Constituent element | Young's modulus (GPa) | Electrode structure factor | Ion conductivity (m S/cm) | Effective ion conductivity (mS/cm) |
|---|---|---|---|---|---|
| Example 1 | Li, Ta, O, Cl | 10.8 | 0.09 | 5.6 | 0.52 |
| Example 2 | Li, Zr, O, S, Cl | 17.8 | 0.08 | 2.1 | 0.18 |
| Example 3 | Li, Ta, O, Cl | 19.6 | 0.06 | 6.5 | 0.42 |
| Comparative Example 2 | Li, Ta, O, Cl | 23.0 | 0.04 | 3.0 | 0.13 |
| Comparative Example 1 | Li, Ta, O, Cl | 26.1 | 0.04 | 5.0 | 0.25 |

### (Consideration)

As obvious from Table 1, the solid electrolyte materials of Examples 1 to 3 each have a high ratio of the effective ion conductivity to the ion conductivity, i.e., a large electrode structure factor.

As obvious by comparing Examples 1 to 3 to Comparative Examples 1 and 2, the electrode structure factor decreases with an increase in the Young's modulus.

It was found that the Young's modulus of the solid electrolyte material can be controlled by changing the conditions for producing the solid electrolyte material. As in Comparative Example 1, a solid electrolyte material produced by treatment with a planetary ball mill and then treatment with heat has a high Young's modulus. In addition, as in Comparative Example 2, a solid electrolyte material produced by increasing the input energy of the planetary ball mill also has a high Young's modulus.

As described above, the solid electrolyte material of the present disclosure can realize a large electrode structure factor and is therefore suitable for providing a battery having excellent charge and discharge characteristics.

### Industrial Applicability

The battery of the present disclosure is used in, for example, an all-solid lithium ion secondary battery.

### Reference Signs List

100 solid electrolyte particle
101 powder of solid electrolyte material
201 positive electrode
202 electrolyte layer
203 negative electrode
204 positive electrode active material particle
205 negative electrode active material particle
206 electrode active material particle
216 covering layer
300 compression molding dies
301 punch upper part
302 die
303 punch lower part
1000 battery
1100 electrode material

## Claims

1. A solid electrolyte material comprising Li, M, A, and X, wherein
M is at least one selected from the group consisting of Nb, Ta, and Zr,
A is at least one selected from the group consisting of O and S,
X is at least one selected from the group consisting of F, Cl, Br, and I, and
the solid electrolyte material has a Young's modulus of less than 23 GPa.

2. The solid electrolyte material according to claim 1, wherein
X includes Cl.

3. The solid electrolyte material according to claim 1 or 2, wherein
A includes O.

4. The solid electrolyte material according to claim 3, wherein
A is O and S.

5. The solid electrolyte material according to any one of claims 1 to 4, having
a Young's modulus of 20 GPa or less.

6. The solid electrolyte material according to claim 5, having
a Young's modulus of 10.8 GPa or more and 19.6 GPa or less.

7. The solid electrolyte material according to any one of claims 1 to 6, wherein
a molar ratio of Li to M is 0.60 or more and 3.0 or less.

8. The solid electrolyte material according to claim 7, wherein
the molar ratio of Li to M is 0.90 or more and 2.0 or less.

9. The solid electrolyte material according to claim 3, wherein
a molar ratio of O to X is 0.05 or more and 0.35 or less.

10. The solid electrolyte material according to any one of claims 1 to 9, wherein
A includes S, and
a molar ratio of S to M is 0.1 or more and 0.7 or less.

11. A battery comprising:
a positive electrode;
a negative electrode; and
an electrolyte layer disposed between the positive electrode and the negative electrode, wherein,
at least one selected from the group consisting of the positive electrode, the negative electrode, and the electrolyte layer contains the solid electrolyte material according to any one of claims 1 to 10.
